# EUROPEAN PATENT APPLICATION

(11) **EP 4 737 180 A1**
(43) Date of publication of application: **06.05.2026**
(21) Application number: 24832170.5
(22) Date of filing: 08.02.2024
(51) Int. Cl.: B60K 35/00, G02B 27/01, B60K 35/22, B60K 35/23, B60K 35/81

(54) **DISPLAY DEVICE FOR VEHICLE**

(30) Priority: 28.06.2023 KR 20230083536
(71) Applicant: LG Electronics Inc., Yeongdeungpo-gu Seoul 07336 (KR)
(72) Inventor: KIM, Jinyong, Seoul 06772 (KR); JUNG, Youngho, Seoul 06772 (KR)
(74) Representative: Vossius & Partner Patentanwälte Rechtsanwälte mbB
(86) International application number: PCT/KR2024/001944
(87) International publication number: WO 2025/005382

(57) **Abstract**

A display apparatus for vehicle according to embodiment of the present disclosure includes: a picture generation device including a light output device and to output projection image; a first mirror to reflect a first projection image corresponding to a portion of the projection image; a screen including one surface on which the first projection image reflected from the first mirror is projected; a second mirror to reflect a second projection image corresponding to another portion of the projection image to a windshield; and a first actuator to change position or angle of the first mirror, wherein, based on change in the position or angle of the first mirror, a size of the first projection image projected on the screen is changed. Accordingly, it is possible to change the size of a cluster display while implementing a plurality of displays in integrated manner based on a single picture generation device.

## Description

### BACKGROUND

### 1. Field

The present disclosure relates to a display apparatus for a vehicle, and more particularly, to a display apparatus for a vehicle capable of changing the size of a cluster display while implementing a plurality of displays in an integrated manner by using a single picture generation device.

### 2. Description of the Related Art

A vehicle is a machine that allows a user who rides therein to move in a desired direction. A representative example of the vehicle is a car.

Meanwhile, for convenience of vehicle users, some vehicles are equipped with a display apparatus or device.

For example, a display is positioned on an instrument cluster to present various types of information. In addition to the cluster display, in order to display vehicle driving information and the like, various displays, such as a center information display (CID) and a head-up display that outputs a projection image onto a windshield, are increasingly being mounted in vehicles.

As various displays are disposed in a vehicle, methods for operating the displays in an integrated manner have been studied.

Meanwhile, Japanese Laid-open Patent Publication No. 11-59224 (hereinafter referred to as "Prior Art Document 1"), which is hereby incorporated by reference, discloses a front window display device that adjusts the brightness of a head-up display (HUD) of the window display device based on data of an illuminance sensor.

However, in Prior Art Document 1, only the window display device is disclosed, and thus it has a limitation in that integrated operation of various displays is difficult.

Meanwhile, U.S. Patent Publication No. US10298890 (hereinafter referred to as "Prior Art Document 2"), which is hereby incorporated by reference, discloses a vehicle display device that projects an image using a cluster display.

However, in Prior Art Document 2, only the cluster display is disclosed, and thus it has a limitation in that integrated operation of various displays is difficult.

### SUMMARY

It is an object of the present disclosure to provide a display apparatus for a vehicle capable of changing the size of a cluster display while implementing a plurality of displays in an integrated manner by using a single picture generation device.

It is another object of the present disclosure to provide a display apparatus for a vehicle capable of changing the size of a head-up display while implementing a plurality of displays in an integrated manner by using a single picture generation device.

In accordance with an aspect of the present disclosure, the above and other objects can be accomplished by providing a display apparatus for a vehicle including: a picture generation device including a light output device and configured to output a projection image; a first mirror configured to reflect a first projection image corresponding to a portion of the projection image from the picture generation device; a screen including one surface on which the first projection image reflected from the first mirror is projected; a second mirror configured to reflect a second projection image corresponding to another portion of the projection image from the picture generation device to a windshield; and a first actuator configured to change a position or an angle of the first mirror. Based on a change in the position or the angle of the first mirror, a size of the first projection image projected on the screen is changed.

Based on a change in the position or the angle of the first mirror, a size of the second projection image reflected on the windshield can be changed.

The display apparatus can further include a signal processing device configured to control the first actuator. Based on a change in the position or the angle of the first mirror, the signal processing device can be configured to change the size of the first projection image projected on the screen.

Based on a change in the position or the angle of the first mirror, the signal processing device can be configured to change a size of the second projection image reflected on the windshield.

In response to a height of a lower end of the first mirror being higher than a height of a lower end of the second mirror, the signal processing device can be configured to increase the height of the lower end of the first mirror, and decrease the size of the first projection image projected on the screen.

In response to a height of a lower end of the first mirror being higher than a height of a lower end of the second mirror, the signal processing device can be configured to decrease the height of the lower end of the first mirror, and increase the size of the first projection image projected on the screen.

In a multi-display mode, the signal processing device can be configured to the first projection image is displayed on the screen, and project and reflect the second projection image on the windshield. In a cluster-only display mode, the signal processing device can be configured to the first projection image is displayed on the screen, and not project the second projection image on the windshield.

A size of an area in which the first projection image is incident on the first mirror in a cluster-only display mode can be greater than a size of an area in which the first projection image is incident on the first mirror in a multi-display mode.

In a multi-display mode, the signal processing device can be configured to the first projection image is displayed on the screen, and project and reflect the second projection image on the windshield. In a head-up-only display mode, the signal processing device can be configured to the first projection image is not projected on the screen, and project and reflect the second projection image on the windshield.

A size of an area in which the second projection image is incident on the second mirror in a head-up-only display mode can be greater than a size of an area in which the second projection image is incident on the second mirror in a multi-display mode.

The display apparatus can further include a second actuator configured to adjust a height or an angle of the screen. The signal processing device can be configured to adjust the height of the screen.

The display apparatus can further include a third actuator configured to adjust a height or an angle of the second mirror. In response to an adjustment of the height of the screen, the signal processing device can be configured to adjust a height or an angle of the first mirror or the second mirror.

In response to a height of a lower end of the first mirror being less than a height of a lower end of the second mirror, the signal processing device can be configured to decrease the height of the lower end of the first mirror, and decrease the size of the first projection image projected on the screen.

In response to a height of a lower end of the first mirror being less than a height of a lower end of the second mirror, the signal processing device can be configured to increase the height of the lower end of the first mirror, and increase the size of the first projection image projected on the screen.

In accordance with another aspect of the present disclosure, there is provided a display apparatus for a vehicle including: a picture generation device including a light output device and configured to output a projection image; a first mirror configured to reflect a first projection image corresponding to a portion of the projection image from the picture generation device; a screen including one surface on which the first projection image reflected from the first mirror is projected; a second mirror configured to reflect a second projection image corresponding to another portion of the projection image from the picture generation device to a windshield; and a first actuator configured to change a position or an angle of the first mirror. Based on a change in the position or the angle of the first mirror, a size of the first projection image projected on the screen or a size of the second projection image reflected on the windshield is changed.

The display apparatus can further include a signal processing device configured to control the first actuator. Based on a change in the position or the angle of the first mirror, the signal processing device can be configured to change the size of the first projection image projected on the screen or the size of the second projection image reflected on the windshield.

The signal processing device can be configured to adjust a height of a lower end of the first mirror, and change the size of the first projection image projected on the screen or the size of the second projection image reflected on the windshield.

The signal processing device can be configured to display only the first projection image on the screen, and not project the second projection image on the windshield.

The signal processing device can be configured to display only the second projection image on the windshield, and not project the first projection image on the screen.

### EFFECTS OF THE DISCLOSURE

A display apparatus for a vehicle according to an embodiment of the present disclosure includes: a picture generation device including a light output device and configured to output a projection image; a first mirror configured to reflect a first projection image corresponding to a portion of the projection image from the picture generation device; a screen including one surface on which the first projection image reflected from the first mirror is projected; a second mirror configured to reflect a second projection image corresponding to another portion of the projection image from the picture generation device to a windshield; and a first actuator configured to change a position or an angle of the first mirror. Based on a change in the position or the angle of the first mirror, a size of the first projection image projected on the screen is changed. Accordingly, it is possible to change the size of a cluster display while implementing a plurality of displays in an integrated manner by using a single picture generation device.

Meanwhile, based on a change in the position or the angle of the first mirror, a size of the second projection image reflected on the windshield can be changed. Accordingly, it is possible to change the size of a head-up display while implementing a plurality of displays in an integrated manner by using a single picture generation device.

Meanwhile, the display apparatus for a vehicle can further include a signal processing device configured to control the first actuator. Based on a change in the position or the angle of the first mirror, the signal processing device can be configured to change the size of the first projection image projected on the screen. Accordingly, it is possible to change the size of a cluster display while implementing a plurality of displays in an integrated manner by using a single picture generation device.

Meanwhile, based on a change in the position or the angle of the first mirror, the signal processing device can be configured to change a size of the second projection image reflected on the windshield. Accordingly, it is possible to change the size of a head-up display while implementing a plurality of displays in an integrated manner by using a single picture generation device.

Meanwhile, in response to a height of a lower end of the first mirror being higher than a height of a lower end of the second mirror, the signal processing device can be configured to increase the height of the lower end of the first mirror, and decrease the size of the first projection image projected on the screen. Accordingly, it is possible to change the size of a cluster display while implementing a plurality of displays in an integrated manner by using a single picture generation device.

Meanwhile, in response to a height of a lower end of the first mirror being higher than a height of a lower end of the second mirror, the signal processing device can be configured to decrease the height of the lower end of the first mirror, and increase the size of the first projection image projected on the screen. Accordingly, it is possible to change the size of a cluster display while implementing a plurality of displays in an integrated manner by using a single picture generation device.

Meanwhile, in a multi-display mode, the signal processing device can be configured to the first projection image is displayed on the screen, and project and reflect the second projection image on the windshield. In a cluster-only display mode, the signal processing device can be configured to the first projection image is displayed on the screen, and not project the second projection image on the windshield. Accordingly, it is possible to change the size of a head-up display while implementing a plurality of displays in an integrated manner by using a single picture generation device.

Meanwhile, a size of an area in which the first projection image is incident on the first mirror in a cluster-only display mode can be greater than a size of an area in which the first projection image is incident on the first mirror in a multi-display mode. Accordingly, it is possible to change the size of a cluster display while implementing a plurality of displays in an integrated manner by using a single picture generation device.

Meanwhile, in a multi-display mode, the signal processing device can be configured to the first projection image is displayed on the screen, and project and reflect the second projection image on the windshield. In a head-up-only display mode, the signal processing device can be configured to the first projection image is not projected on the screen, and project and reflect the second projection image on the windshield. Accordingly, it is possible to change the size of a head-up display while implementing a plurality of displays in an integrated manner by using a single picture generation device.

Meanwhile, a size of an area in which the second projection image is incident on the second mirror in a head-up-only display mode can be greater than a size of an area in which the second projection image is incident on the second mirror in a multi-display mode. Accordingly, it is possible to change the size of a head-up display while implementing a plurality of displays in an integrated manner by using a single picture generation device.

Meanwhile, the display apparatus for a vehicle can further include a second actuator configured to adjust a height or an angle of the screen. The signal processing device can be configured to adjust the height of the screen. Accordingly, it is possible to change the height of a cluster display while implementing a plurality of displays in an integrated manner by using a single picture generation device.

Meanwhile, the display apparatus for a vehicle can further include a third actuator configured to adjust a height or an angle of the second mirror. In response to an adjustment of the height of the screen, the signal processing device can be configured to adjust a height or an angle of the first mirror or the second mirror. Accordingly, it is possible to change the height of a cluster display while implementing a plurality of displays in an integrated manner by using a single picture generation device.

Meanwhile, in response to a height of a lower end of the first mirror being less than a height of a lower end of the second mirror, the signal processing device can be configured to decrease the height of the lower end of the first mirror, and decrease the size of the first projection image projected on the screen. Accordingly, it is possible to change the size of a cluster display while implementing a plurality of displays in an integrated manner by using a single picture generation device.

Meanwhile, in response to a height of a lower end of the first mirror being less than a height of a lower end of the second mirror, the signal processing device can be configured to increase the height of the lower end of the first mirror, and increase the size of the first projection image projected on the screen. Accordingly, it is possible to change the size of a cluster display while implementing a plurality of displays in an integrated manner by using a single picture generation device.

A display apparatus for a vehicle according to another embodiment of the present disclosure includes: a picture generation device including a light output device and configured to output a projection image; a first mirror configured to reflect a first projection image corresponding to a portion of the projection image from the picture generation device; a screen including one surface on which the first projection image reflected from the first mirror is projected; a second mirror configured to reflect a second projection image corresponding to another portion of the projection image from the picture generation device to a windshield; and a first actuator configured to change a position or an angle of the first mirror. Based on a change in the position or the angle of the first mirror, a size of the first projection image projected on the screen or a size of the second projection image reflected on the windshield is changed. Accordingly, it is possible to change the size of a cluster display or a head-up display while implementing a plurality of displays in an integrated manner by using a single picture generation device.

Meanwhile, the display apparatus for a vehicle can further include a signal processing device configured to control the first actuator. Based on a change in the position or the angle of the first mirror, the signal processing device can be configured to change the size of the first projection image projected on the screen or the size of the second projection image reflected on the windshield. Accordingly, it is possible to change the size of a cluster display or a head-up display while implementing a plurality of displays in an integrated manner by using a single picture generation device.

Meanwhile, the signal processing device can be configured to adjust a height of a lower end of the first mirror, and change the size of the first projection image projected on the screen or the size of the second projection image reflected on the windshield. Accordingly, it is possible to change the size of a cluster display or a head-up display while implementing a plurality of displays in an integrated manner by using a single picture generation device.

Meanwhile, the signal processing device can be configured to display only the first projection image on the screen, and not project the second projection image on the windshield. Accordingly, it is possible to change the size of a cluster display while implementing a plurality of displays in an integrated manner by using a single picture generation device.

Meanwhile, the signal processing device can be configured to display only the second projection image on the windshield, and not project the first projection image on the screen. Accordingly, it is possible to change the size of a head-up display while implementing a plurality of displays in an integrated manner by using a single picture generation device.

### BRIEF DESCRIPTION OF THE DRAWINGS

FIG. 1 illustrates an example of the exterior and interior of a vehicle.
FIG. 2 illustrates an outer appearance of a display apparatus for a vehicle according to an embodiment of the present disclosure.
FIG. 3 illustrates an example of an internal block diagram of the display apparatus for a vehicle of FIG. 2.
FIGS. 4A to 4E are diagrams referred to in describing the operation of a display apparatus for a vehicle according to an embodiment of the present disclosure.
FIG. 5 illustrates an example of an internal block diagram of a display apparatus for a vehicle according to an embodiment of the present disclosure.
FIGS. 6 to 14D are diagrams referred to in the description of FIG. 4.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

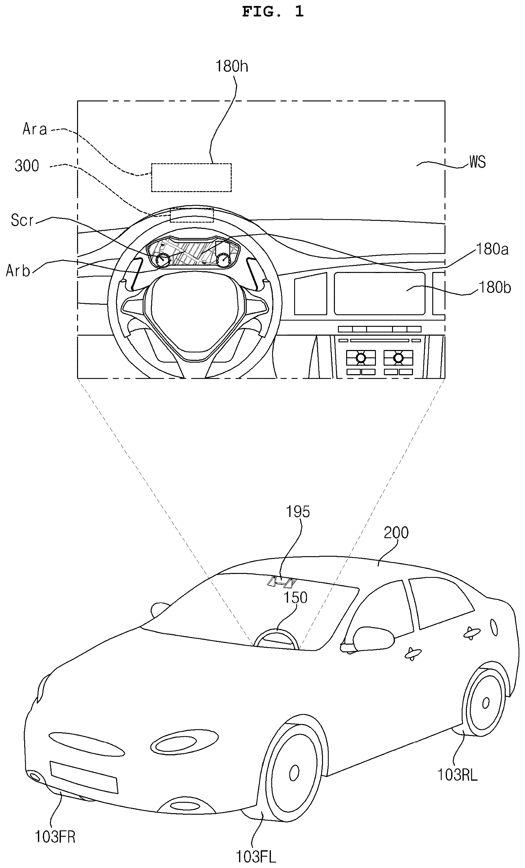

FIG. 1 illustrates an example of the exterior and interior of a vehicle.

Referring to FIG.1, a vehicle 200 can include a plurality of wheels 103FR, 103FL, 103RL,... rotated by a power source and a steering wheel 150 for adjusting a traveling direction of the vehicle 200.

The vehicle 200 can further include a camera 195 for acquiring an image of the front of the vehicle.

The vehicle 200 can further include therein a plurality of displays 180a, 180b, and 180h for displaying images, information, and the like.

For example, among the plurality of displays 180a, 180b, and 180h, a first display 180a can be a cluster display, a second display 180b can be a center information display (CID) or an AVN display, and a third display 180h can be a head-up display (HUD) that projects an image onto a predetermined area Ara of a windshield WS.

Meanwhile, in the present disclosure, among the plurality of displays 180a, 180b, and 180h, the first display 180a and the third display 180h are integrated and implemented as a single apparatus.

To this end, a display apparatus 100 for a vehicle (or simply referred to as "vehicle display apparatus") according to an embodiment of the present disclosure includes a picture generation device 300.

That is, the vehicle display apparatus 100 according to an embodiment of the present disclosure outputs a plurality of projection images using a single picture generation device 300, separates optical paths of the plurality of projection images, and projects a first projection image, through a first optical path, onto a screen Scr to thereby display cluster information and projects a second projection image, through a second optical path, onto a windshield WS to thereby display various information such as vehicle speed. Accordingly, it is possible to implement a plurality of displays in an integrated manner.

Meanwhile, the vehicle 200 described herein can be a concept including all of an internal combustion engine vehicle having an engine as a power source, a hybrid vehicle having an engine and an electric motor as power sources, and an electric vehicle having an electric motor as a power source.

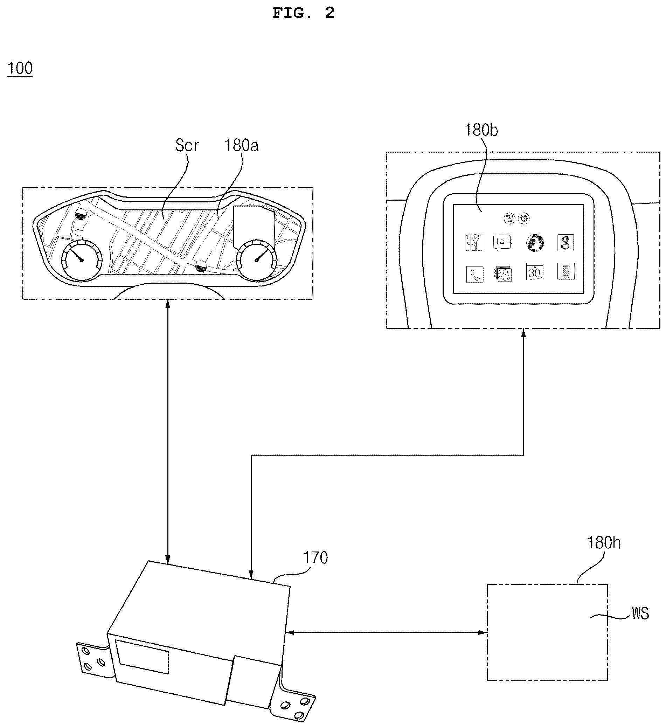

FIG. 2 illustrates an outer appearance of a display apparatus for a vehicle according to an embodiment of the present disclosure.

The vehicle display apparatus 100 according to an embodiment of the present disclosure can include a signal processing device 170 configured to perform signal processing to display an image and information on at least one of the plurality of displays 180a, 180b, and 180h.

As for the plurality of displays 180a, 180b, and 180h, the first display 180a can be a cluster display 180a for displaying a driving state and operation information, the second display 180b can be a center information display (CID) 180b for displaying vehicle driving information, a navigation map, various types of entertainment information, or an image, and the third display 180h can be a HUD display 180h for displaying vehicle driving information.

Meanwhile, among the plurality of displays 180a, 180b, and 180h, the first display 180a can include a screen Scr on which a first projection image is displayed, and the third display 180h can include a windshield WS on which a second protection image is projected.

The signal processing device 170 can be provided therein with a memory 508 and a processor 175 to control at least one of the plurality of displays 180a, 180b, and 180h.

Meanwhile, the signal processing device 170 can execute first to third virtual machines (not shown) on a hypervisor 505 in the processor 175.

The first virtual machine (not shown), which is a server virtual machine, can control the second virtual machine (not shown) and the third virtual machine (not shown), which are guest virtual machines.

Meanwhile, the second virtual machine can be referred to as a first guest virtual machine, and the third virtual machine can be referred to as a second guest virtual machine.

The first guest virtual machine (not shown) can be operated for the first display 180a, and the second guest virtual machine (not shown) can be operated for the second display 180b or the third display 180h.

Meanwhile, the server virtualization machine (not shown) in the processor 175 can be configured to set the memory 508 based on the hypervisor 505 for transmission of the same data to the first guest virtualization machine (not shown) and the second guest virtualization machine (not shown). Accordingly, the first display 180a and the second display 180b in the vehicle can display the same information or the same image in a synchronized manner.

Meanwhile, the server virtualization machine (not shown) in the processor 175 can receive and process wheel speed sensor data of the vehicle, and can transmit the processed wheel speed sensor data to at least one of the first guest virtualization machine (not shown) and the second guest virtualization machine (not shown). Accordingly, at least one virtual machine can share the wheel speed sensor data of the vehicle.

Thus, by using the single signal processing device 170, it is possible to control the plurality of displays 180a, 180b, and 180h.

Meanwhile, some of the plurality of displays 180a, 180b, and 180h can operate under a Linux-based operating system (OS), and others can operate under a Web-based operating system (OS).

In some embodiments, the signal processing device 170 can control the plurality of displays 180a, 180b, and 180h operating under different operating systems (OS) to display the same information or the same image in a synchronized manner.

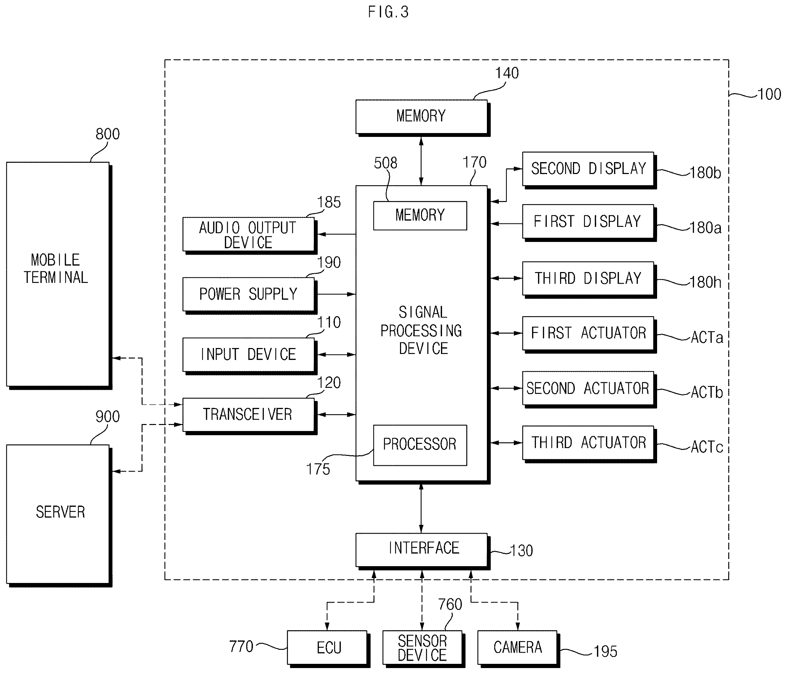

FIG. 3 illustrates an example of an internal block diagram of a display apparatus for a vehicle according to an embodiment of the present disclosure.

Referring to FIG. 3, the vehicle display apparatus 100 according to an embodiment of the present disclosure can include an input device 110, a transceiver 120, an interface 130, a memory 140, a signal processing device 170, a plurality of displays 180a, 180b, and 180h, an audio output device 185, and a power supply 190.

The input device 110 can include a physical button, a pad, and the like for button input, touch input, and the like.

Meanwhile, the input device 110 can include a microphone (not shown) for user voice input.

The transceiver 120 can wirelessly exchange data with a mobile terminal 800 or a server (not shown).

In particular, the transceiver 120 can wirelessly exchange data with a mobile terminal of a vehicle driver. Any of various data communication schemes, such as Bluetooth, Wi-Fi, Wi-Fi Direct, and APIX, can be used as a wireless data communication scheme.

The transceiver 120 can receive weather information and road traffic condition information, e.g., transport protocol expert group (TPEG) information, from the mobile terminal 800 or the server (not shown) . To this end, the transceiver 120 can include a mobile communication module (not shown) .

The interface 130 can receive sensor information from an electronic control unit (ECU) 770 or a sensor device 760, and can transmit the received information to the signal processing device 170.

Here, the sensor information can include at least one of vehicle heading information, vehicle location information (global positioning system (GPS) information), vehicle angle information, vehicle speed information, vehicle acceleration information, vehicle tilt information, vehicle forward/backward movement information, battery information, fuel information, tire information, vehicle lamp information, in-vehicle temperature information, and in-vehicle humidity information.

The sensor information can be acquired from a heading sensor, a yaw sensor, a gyro sensor, a position module, a vehicle forward/backward movement sensor, a wheel sensor, a vehicle speed sensor, a vehicle body tilt sensor, a battery sensor, a fuel sensor, a tire sensor, a steering wheel rotation sensor, an in-vehicle temperature sensor, an in-vehicle humidity sensor, etc. The position module can include a GPS module for receiving GPS information.

Meanwhile, the interface 130 can receive front-of-vehicle image data, side-of-vehicle image data, rear-of-vehicle image data, and obstacle-around-vehicle distance information from a camera 195, a LiDAR (not shown), or the like, and can transmit the received information to the signal processing device 170.

The memory 140 can store various data necessary for the overall operation of the vehicle display apparatus 100, such as programs for processing or control of the signal processing device 170.

For example, the memory 140 can store data regarding a hypervisor, a server virtual machine (not shown), and a plurality of guest virtual machines to execute within the processor 175.

The audio output device 185 can convert an electrical signal from the signal processing device 170 into an audio signal and output the audio signal. To this end, the audio output device 185 can include a speaker and the like.

The power supply 190 can supply power required to operate components under the control of the signal processing device 170. In particular, the power supply 190 can receive power from a battery in the vehicle.

The HUD display 180h, which is the third display, can include the picture generation device 300 of FIG. 1 to project an image, and can output an augmented reality-based object under the control of the signal processing device 170.

For example, the HUD display 180h can output vehicle speed information, vehicle traveling direction information, a forward-vehicle object, a distance indicator showing a distance to a vehicle ahead, and the like.

In another example, the HUD display 180h can output an augmented reality lane carpet, an augmented reality route carpet, or an augmented reality dynamic carpet corresponding to a road image.

The signal processing device 170 can control the plurality of displays 180a, 180b, and 180h.

The signal processing device 170 can control the overall operation of each unit or device in the vehicle display apparatus 100.

For example, the signal processing device 170 can include a memory 508 and a processor 175 configured to perform signal processing for the vehicle displays 180a and 180b.

The processor 175 can execute the hypervisor (not shown), and can execute the server virtual machine (not shown) and the plurality of guest virtual machines (not shown) on the executed hypervisor.

Here, the first guest virtual machine (not shown) can be operated for the first display 180a, and the second guest virtual machine (not shown) can be operated for the second display 180b or the third display 180h.

Meanwhile, the signal processing device 170 can process various signals, such as an audio signal, an image (or video) signal, and a data signal. To this end, the signal processing device 170 can be implemented in the form of a system on chip (SOC).

The vehicle display apparatus 100 according to an embodiment of the present disclosure can further include a plurality of actuators ACTa to ACTc configured to change a position or an angle of a plurality of mirrors or a screen Scr, which will be described below.

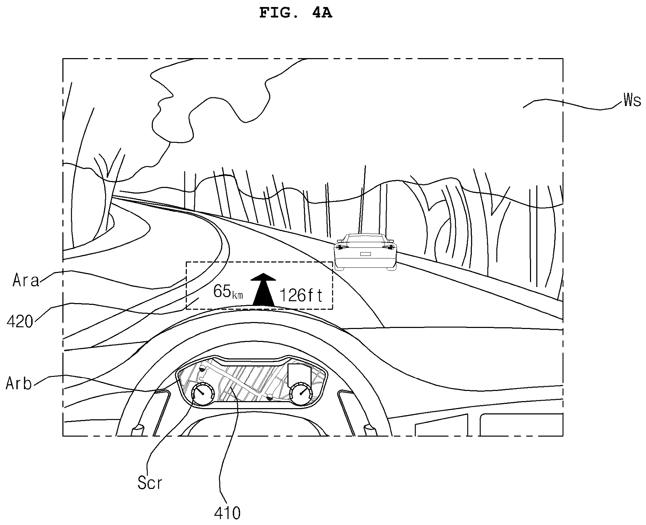

FIGS. 4A to 4E are diagrams referred to in describing the operation of a display apparatus for a vehicle according to an embodiment of the present disclosure.

FIG. 4A illustrates an example in which a cluster image 410 is displayed on a screen Scr corresponding to the first display 180a, and a HUD image 420, which is a virtual image, is displayed in a predetermined area Ara in front of a windshield WS corresponding to the third display 180h.

According to the vehicle display apparatus 100 of FIG. 3, by using the single picture generation device 300, the cluster image 410 can be displayed on the screen Scr and the HUD image 420 can be displayed in the predetermined area Ara of the windshield WS, as illustrated in FIG. 4A.

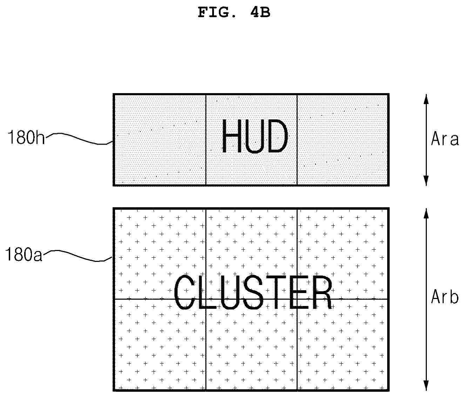

Meanwhile, the vehicle display apparatus 100 according to an embodiment of the present disclosure changes, via an actuator, the size of a projection image projected on the screen Scr. This will be described with reference to FIGS. 4B to 4E.

FIG. 4B illustrates an example in which a first projection image projected on the screen Scr corresponding to the first display 180a has a first size Arb, and a second projection image projected on the windshield WS corresponding to the third display 180h has a second size Ara.

As shown in FIG. 4B, the first size Arb can be greater than the second size Ara. For example, the first size Arb can be approximately 2 times the second size Ara.

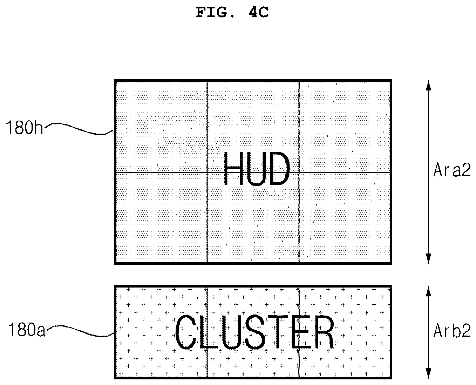

FIG. 4C illustrates an example in which a first projection image projected on the screen Scr corresponding to the first display 180a has a third size Arb2 and a second projection image projected on the windshield WS corresponding to the third display 180h has a fourth size Ara2.

As shown in FIG. 4C, the third size Arb2 can be less than the fourth size Ara2. For example, the third size Arb2 can be approximately 0.5 times the fourth size Ara2.

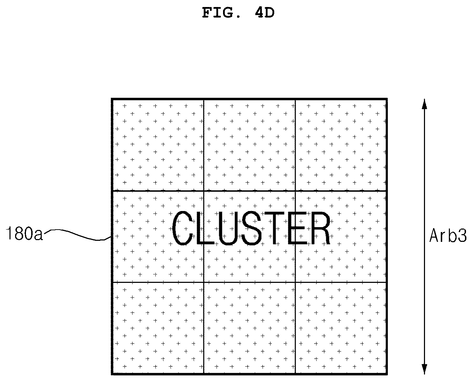

FIG. 4D illustrates an example in which a first projection image projected on the screen Scr corresponding to the first display 180a has a fifth size Arb3 and no projection image is projected on the windshield WS corresponding to the third display 180h.

As shown in FIG. 4D, the fifth size Arb can correspond to a sum of the first size Arb and the second size Ara of FIG. 4B or a sum of the third size Arb2 and the fourth size Ara2 of FIG. 4C.

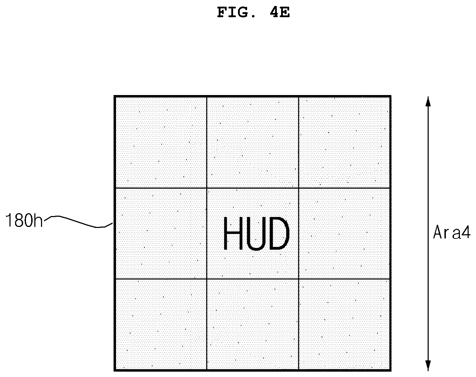

FIG. 4E illustrates an example in which no projection image is projected on the screen Scr corresponding to the first display 180a and a second projection image projected on the windshield WS corresponding to the third display 180h has a sixth size Ara4.

As shown in FIG. 4E, the sixth size Ara4 can correspond to a sum of the first size Arb and the second size Ara of FIG. 4B or a sum of the third size Arb2 and the fourth size Ara2 of FIG. 4C.

The vehicle display apparatus 100 according to an embodiment of the present disclosure changes, via an actuator, the size of the first projection image projected on the screen Scr, as illustrated in FIGS. 4B to 4D. Accordingly, it is possible to change the size of the cluster display while implementing a plurality of displays in an integrated manner by using the single picture generation device 300.

Meanwhile, the vehicle display apparatus 100 according to an embodiment of the present disclosure changes, via an actuator, the size of the second projection image projected on the windshield WS, as illustrated in FIGS. 4B to 4D. Accordingly, it is possible to change the size of the head-up display while implementing a plurality of displays in an integrated manner by using the single picture generation device 300.

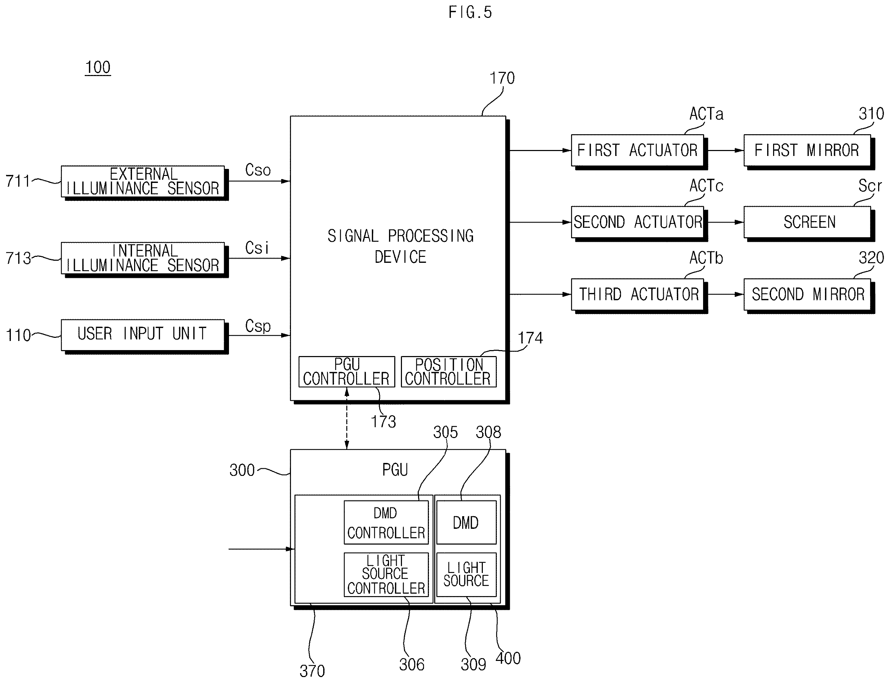

FIG. 5 illustrates an example of an internal block diagram of a display apparatus for a vehicle according to an embodiment of the present disclosure.

Referring to FIG. 5, the vehicle display apparatus 100 according to an embodiment of the present disclosure includes a picture generation device 300 that includes a light output device 400 and outputs a projection image, a first mirror 310 that reflects a first projection image LTa, which is a portion of the projection image from the picture generation device 300, a screen Scr having one surface on which the first projection image LTa reflected from the first mirror 310 is projected, a second mirror 320 that reflects a second projection image LTb, which is another portion of the projection image from the picture generation device 300 to a windshield WS, and a first actuator ACTa that changes a position or an angle of the first mirror 310.

Meanwhile, the first projection image LTa, which is a portion of the projection image output from the picture generation device 300, can be projected on one surface of the screen Scr after passing through the first mirror 310. Accordingly, it is possible to display a cluster image on the first display 180a including the screen Scr.

Meanwhile, the second projection image LTb, which is another portion of the projection image output from the picture generation device 300 can be projected on one surface of the windshield WS after passing through the second mirror 320. Accordingly, it is possible to display various information or images on the third display 180h including the windshield WS.

Meanwhile, based on a change in the position or angle of the first mirror 310, a size of the first projection image LTa projected on the screen Scr can be changed. Accordingly, it is possible to change the size of the cluster display while implementing a plurality of displays in an integrated manner by using the single picture generation device 300.

Meanwhile, based on a change in the position or angle of the first mirror 310, a size of the second projection image LTb reflected on the windshield WS can be changed. Accordingly, it is possible to change the size of the head-up display while implementing a plurality of displays in an integrated manner by using the single picture generation device 300.

Meanwhile, the vehicle display apparatus 100 according to an embodiment of the present disclosure can further include a signal processing device 170 that controls the first actuator ACTa.

Meanwhile, based on a change in the position or angle of the first mirror 310, the signal processing device 170 can be configured to change the size of the first projection image LTa projected on the screen Scr. Accordingly, it is possible to change the size of the cluster display while implementing a plurality of displays in an integrated manner by using the single picture generation device 300.

Meanwhile, based on a change in the position or angle of the first mirror 310, the signal processing device 170 can be configured to change the size of the second projection image LTb reflected on the windshield WS. Accordingly, it is possible to change the size of the head-up display while implementing a plurality of displays in an integrated manner by using the single picture generation device 300.

Meanwhile, the signal processing device 170 can control the picture generation device 300.

The signal processing device 170 can control a luminance of the first projection image LTa or the second projection image LTb to have a first level in a first mode, and can control the luminance of the first projection image LTa or the second projection image LTb to have a second level in a second mode. Accordingly, it is possible to change the luminance of the first projection image LTa or the second projection image LTb.

Meanwhile, the vehicle display apparatus 100 according to an embodiment of the present disclosure can further include an external illuminance sensor 711, an internal illuminance sensor, and/or a user input unit 110.

Based on an external illuminance Cso from the external illuminance sensor 711, an internal illuminance Csi from the internal illuminance sensor 713, or a setting input Csp from the user input device 110, the signal processing device 170 can output a control signal for adjusting a luminance of the first projection image LTa or the second projection image LTb.

For example, the signal processing device 170 can be configured to increase the luminance of the first projection image LTa or the second projection image LTb as the external illuminance Cso increases.

In another example, the signal processing device 170 can control the luminance of the first projection image LTa or the second projection image LTb to increase as the internal illuminance Csi decreases.

In another example, the signal processing device 170 can be configured to decrease the luminance of the first projection image LTa or the second projection image LTb as the setting input Csp decreases. Accordingly, it is possible to change the luminance of the first projection image LTa or the second projection image LTb projected on the first screen SCRa or the second screen SCRb.

Meanwhile, the picture generation device 300 includes a light output device 400 for light output.

The light output device 400 can include a light source 309 and a digital mirror device 308 that reflects light emitted from the light source 309.

For example, the light source 309 can include an LED diode, a laser diode, or the like.

The digital mirror device 308 can include a plurality of digital mirrors. For example, the digital mirror device 308 can include a digital micromirror device (DMD).

Meanwhile, the picture generation device 300 can further include a digital mirror controller 305 for controlling the digital mirror device 308, and a light source controller 306 for controlling the light source 309.

In particular, the picture generation device 300 can be provided with a processor 370, and the processor 370 can include the digital mirror controller 305 for controlling the digital mirror device 308, and the light source controller 306 for controlling the light source 309.

Meanwhile, the signal processing device 170 can include a picture generation controller 173 for controlling the picture generation device 300 and a position controller 174 for controlling a position or an angle of a plurality of mirrors 310 to 330.

Meanwhile, based on the external illuminance Cso from the external illuminance sensor 711, the internal illuminance Csi from the internal illuminance sensor 713, or the setting input Csp from the user input device 110, the signal processing device 170 can perform operation control of the digital mirror device 308 or the light source 309.

For example, in response to an increase in the external illumination Cso, the signal processing device 170 can control, on a frame-by-frame basis, the luminance of the first projection image LTa to be less than the luminance of the second projection image LTb output from the light output device 400.

In another example, in response to a decrease in the internal illumination Csi, the signal processing device 170 can control, on a frame-by-frame basis, the luminance of the first projection image LTa to be less than luminance of the second projection image LTb output from the light output device 400.

In another example, in response to a decrease in the setting input Csp, the signal processing device 170 can control, on a frame-by-frame basis, the luminance of the first projection image LTa to be less than luminance of the second projection image LTb output from the light output device 400.

Meanwhile, the vehicle display apparatus 100 according to an embodiment of the present disclosure can further include a second actuator ACTc that adjusts a height or an angle of the screen Scr.

For example, the signal processing device 170 can be configured to adjust the height of the screen Scr. Accordingly, it is possible to change the height of the cluster display while implementing a plurality of displays in an integrated manner by using the single picture generation device 300.

Meanwhile, the vehicle display apparatus 100 according to an embodiment of the present disclosure can further include a third actuator ACTb that adjusts a height or an angle of the second mirror 320.

For example, in response to an adjustment of the height of the screen Scr, the signal processing device can be configured to adjust a height or an angle of the first mirror 310 or the second mirror 320. Accordingly, it is possible to change the height of the cluster display while implementing a plurality of displays in an integrated manner by using the single picture generation device 300.

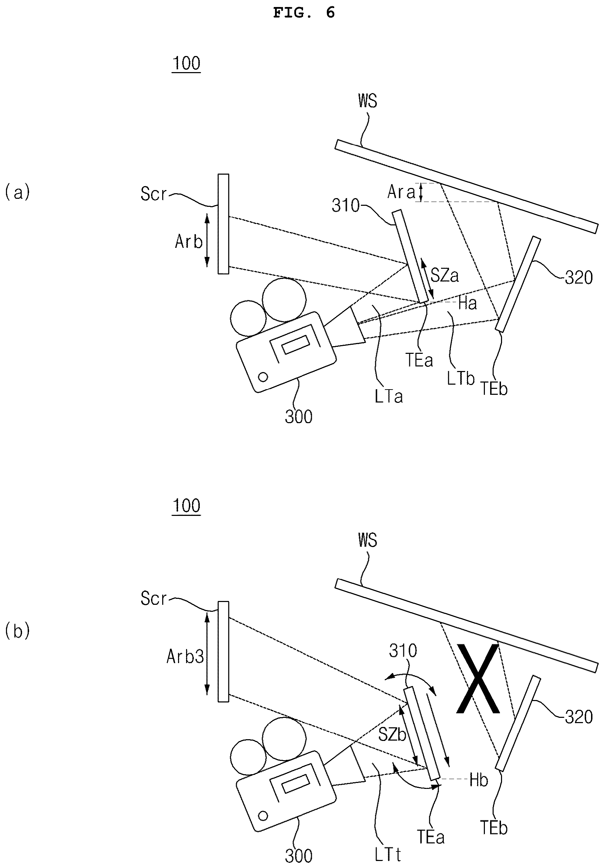

FIGS. 6 to 14D are diagrams referred to in the description of FIG. 5.

FIG. 6 illustrates an example in which a first projection image and a second projection image are displayed as in FIG. 4B, and subsequently display only the first projection image as in FIG. 4D.

Referring to FIG. 6, the picture generation device 300 in the vehicle display apparatus 100 according to an embodiment of the present disclosure outputs a first projection image LTa and a second projection image LTb, as shown in (a) of FIG. 6.

In this case, a size of the first projection image LTa output from the picture generation device 300 can be greater than a size of the second projection image LTb.

The first projection image LTa output from the picture generation device 300 is reflected from a partial area (SZa) of the first mirror 310 and is projected on one surface of the screen Scr.

In this case, the size of the first projection image LTa projected on the one surface of the screen Scr can correspond to a first size Arb in the up-down or vertical direction.

Meanwhile, the second projection image LTb output from the picture generation device 300 is reflected from a partial area of the second mirror 320 and is projected on one surface of the windshield WS.

In this case, the size of the second projection image LTb projected on the one surface of the windshield WS can correspond to a second size Ara in the vertical direction.

According to (a) of FIG. 6, the picture generation device 300 outputs the first projection image LTa upward relative to the second projection image LTb.

In addition, according to (a) of FIG. 6, a height Ha of a lower end TEa of the first mirror 310 can be higher than a height of a lower end TEb of the second mirror 320.

Meanwhile, when the height of the lower end TEa of the first mirror 310 is higher than the height of the lower end of TEb of the second mirror 320, the signal processing device 170 can be configured to decrease the height of the lower end TEa of the first mirror 310, and increase the size of the first projection image LTa projected on the screen Scr. Accordingly, it is possible to change the size of the cluster display while implementing a plurality of displays in an integrated manner by using the single picture generation device 300.

(b) of FIG. 6 illustrates an example in which the first projection image LTa projected on the screen Scr is at its maximum size.

That is, (b) of FIG. 6 illustrates that the second projection image LTb projected on one surface of the windshield WS is not projected.

For example, when the height of the lower end TEa of the first mirror 310 is Ha, the signal processing device 170 can be configured to decrease the height of the lower end TEa of the first mirror 310 to Hb, as illustrated in the figure.

Meanwhile, in a display mode as in (a) of FIG. 6, the signal processing device 170 can be configured to display the first projection image LTa on the screen Scr and project and reflect the second projection image LTb on the windshield WS. In a cluster-only display mode as in (b) of FIG. 6, the signal processing device 170 can be configured to display the first projection image LTa on the screen Scr and not project the second projection image LTb on the windshield WS. Accordingly, it is possible to change the size of the cluster display while implementing a plurality of displays in an integrated manner by using the single picture generation device 300.

Meanwhile, a size SZb of an area in which the first projection image LTa is incident on the first mirror 310 in a cluster-only display mode as in (b) of FIG. 6 can be greater than a size SZa of an area in which the first projection image LTa is incident on the first mirror 310 in a multi-display mode as in (a) of FIG. 6.

That is, compared to (a) of FIG. 6, in the case of (b) of FIG. 6, the size of the first projection image LTa output from the picture generation device 300 is larger, and accordingly, the size of the area in which the first projection image LTa is incident on the first mirror 310 becomes larger, and consequently, the size of the first projection image LTa projected on the screen Scr becomes larger.

In this case, the size of the first projection image LTa projected on one surface of the screen Scr can correspond to a fifth size Arb3 in the vertical direction. That is, the fifth size Arb3 can be greater than the first size Arb.

Accordingly, it is possible to change the size of the cluster display while implementing a plurality of displays in an integrated manner by using the single picture generation device 300.

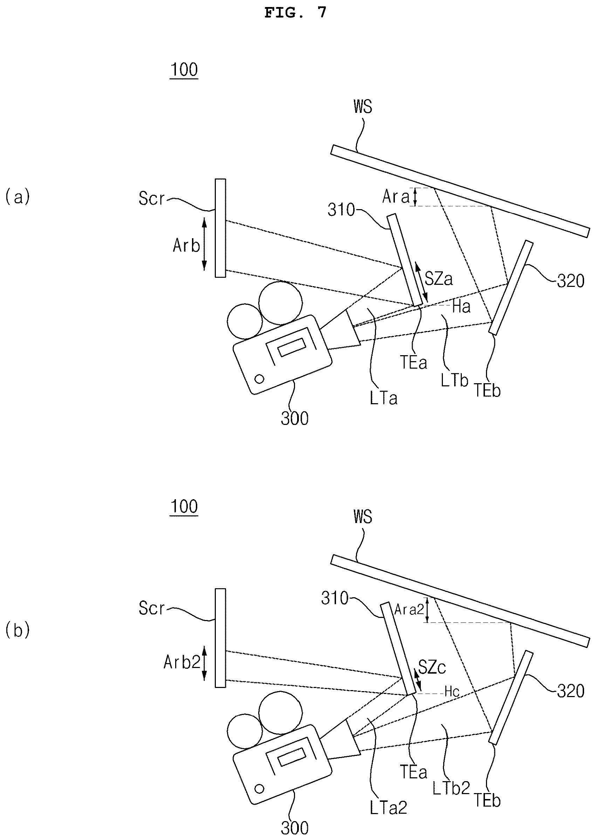

FIG. 7 illustrates an example in which a first projection image and a second projection image are displayed as in FIG. 4B, and subsequently a size of the first projection image decreases as in FIG. 4C.

Referring to FIG. 7, the picture generation device 300 in the vehicle display apparatus 100 according to an embodiment of the present disclosure outputs a first projection image LTa and a second projection image LTb, as shown in (a) of FIG. 7.

The first projection image LTa output from the picture generation device 300 is reflected from a partial area (SZa) of the first mirror 310 and is projected on one surface of the screen Scr.

In this case, the size of the first projection image LTa projected on the one surface of the screen Scr can correspond to a first size Arb in the vertical direction.

Meanwhile, the second projection image LTb output from the picture generation device 300 is reflected from a partial area of the second mirror 320 and is projected on one surface of the windshield WS.

In this case, the size of the second projection image LTb projected on the one surface of the windshield WS can correspond to a second size Ara in the vertical direction.

According to (a) of FIG. 7, the picture generation device 300 outputs the first projection image LTa upward relative to the second projection image LTb.

In addition, according to (a) of FIG. 7, a height Ha of a lower end TEa of the first mirror 310 can be higher than a height of a lower end TEb of the second mirror 320.

Meanwhile, when the height of the lower end TEa of the first mirror 310 is higher than the height of the lower end of TEb of the second mirror 320, the signal processing device 170 can be configured to increase the height of the lower end TEa of the first mirror 310, and decrease the size of the first projection image LTa projected on the screen Scr. Accordingly, it is possible to change the size of the cluster display while implementing a plurality of displays in an integrated manner by using the single picture generation device 300.

(b) of FIG. 7 illustrates an example in which the size of the first projection image LTa projected on the screen Scr is less than that in (a) of FIG. 7.

That is, (b) of FIG. 7 illustrates that, as in FIG. 4C, the size of the second projection image LTb projected on one surface of the windshield WS is greater than the size of the first projection image LTa projected on the screen Scr.

For example, when the height of the lower end TEa of the first mirror 310 is Ha, the signal processing device 170 can be configured to increase the height of the lower end TEa of the first mirror 310 to Hc, as illustrated in the figure.

Meanwhile, a size SZc of an area in which the first projection image LTa is incident on the first mirror 310 in a multi-display mode as in (b) of FIG. 7 can be less than a size SZa of an area in which the first projection image LTa is incident on the first mirror 310 in a multi-display mode as in (a) of FIG. 7.

That is, compared to (a) of FIG. 7, in the case of (b) of FIG. 7, the size of the first projection image LTa output from the picture generation device 300 is smaller, and accordingly, the size of the area incident on the first mirror 310 becomes smaller, and consequently, the size of the first projection image LTa projected on the screen Scr becomes smaller.

In this case, the size of the first projection image LTa projected on one surface of the screen Scr can correspond to a third size Arb2 in the vertical direction. That is, the third size Arb2 can be less than the first size Arb.

Accordingly, it is possible to change the size of the cluster display while implementing a plurality of displays in an integrated manner by using the single picture generation device 300.

Meanwhile, a size of an area in which the second projection image LTb is incident on the second mirror 320 in a multi-display mode as in (b) of FIG. 7 can be greater than a size of an area in which the second projection image LTb is incident on the second mirror 320 in a multi-display mode as in (a) of FIG. 7.

That is, compared to (a) of FIG. 7, in the case of (b) of FIG. 7, the size of the second projection image LTb output from the picture generation device 300 is larger, and accordingly, the size of the area incident on the second mirror 320 becomes larger, and consequently, the size of the second projection image LTb projected on the windshield WS becomes larger.

In this case, the size of the second projection image LTb projected on one surface of the windshield WS can correspond to a fourth size Ara2 in the vertical direction. That is, the fourth size Ara2 can be greater than the second size Ara.

Accordingly, it is possible to change the size of the head-up display while implementing a plurality of displays in an integrated manner by using the single picture generation device 300.

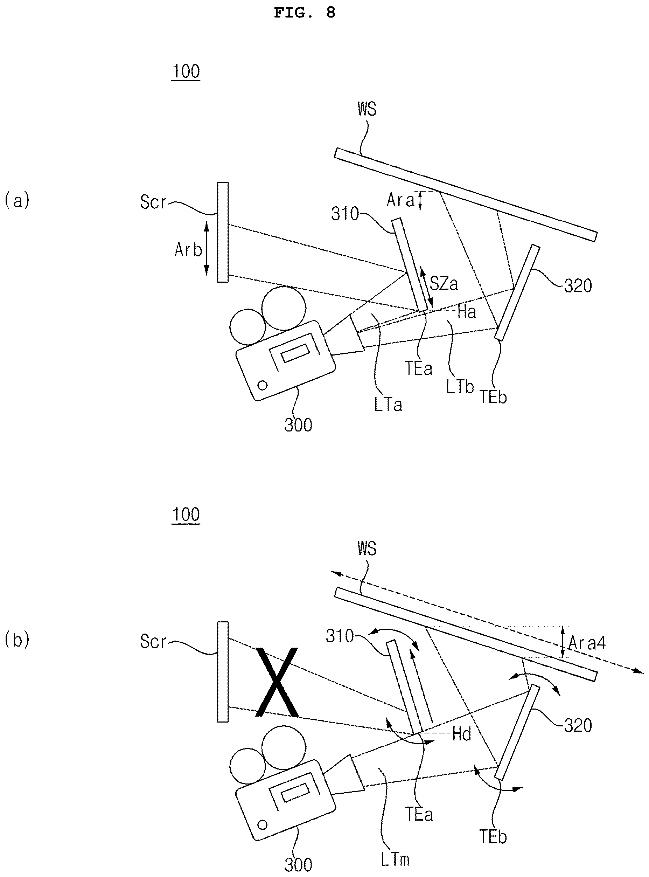

FIG. 8 illustrates an example in which a first projection image and a second projection image are displayed as in FIG. 4B, and subsequently only the second projection image is displayed as in FIG. 4E.

Referring to FIG. 8, the picture generation device 300 in the vehicle display apparatus 100 according to an embodiment of the present disclosure outputs a first projection image LTa and a second projection image LTb, as shown in (a) of FIG. 8.

In this case, the size of the first projection image LTa projected on one surface of the screen Scr can correspond to a first size Arb in the vertical direction, and the size of the second projection image LTb projected on one surface of the windshield WS can correspond to a second size Ara in the vertical direction.

According to (a) of FIG. 8, the picture generation device 300 outputs the first projection image LTa upward relative to the second projection image LTb.

In addition, according to (a) of FIG. 8, a height Ha of a lower end TEa of the first mirror 310 can be higher than a height of a lower end TEb of the second mirror 320.

Meanwhile, when the height of the lower end TEa of the first mirror 310 is higher than the height of the lower end of TEb the second mirror 320, the signal processing device 170 can be configured to increase the height TEa of the lower end TEa of the first mirror 310, and decrease the size of the first projection image LTa projected on the screen Scr.

(b) of FIG. 8 illustrates an example in which the first projection image is projected on the screen Scr, and the second projection image LTb projected on one surface of the windshield WS is at its maximum size.

For example, when the height of the lower end TEa of the first mirror 310 is Ha, the signal processing device 170 can control the height of the lower end TEa of the first mirror 310 to increase to Hd, as illustrated in the figure.

Meanwhile, in a display mode as in (a) of FIG. 8, the signal processing device 170 can be configured to display the first projection image LTa on the screen Scr and project and reflect the second projection image LTb on the windshield WS. In a head-up-only display mode as in (b) of FIG. 8, the signal processing device 170 can be configured to not project the first projection image LTa on the screen Scr and project and reflect the second projection image LTb on the windshield WS. Accordingly, it is possible to change the size of the head-up display while implementing a plurality of displays in an integrated manner by using the single picture generation device 300.

Meanwhile, a size of an area in which the first projection image LTa is incident on the first mirror 310 in a head-up-only display mode as in (b) of FIG. 8 can be greater than a size of an area in which the first projection image LTa is incident on the first mirror 310 in a multi-display mode as in (a) of FIG. 8.

In this case, the size of the second projection image LTb projected on one surface of the windshield WS can correspond to a sixth size Ara4 in the vertical direction. That is, the sixth size Ara4 can be greater than the second size Ara.

Accordingly, it is possible to change the size of the head-up display while implementing a plurality of displays in an integrated manner by using the single picture generation device 300.

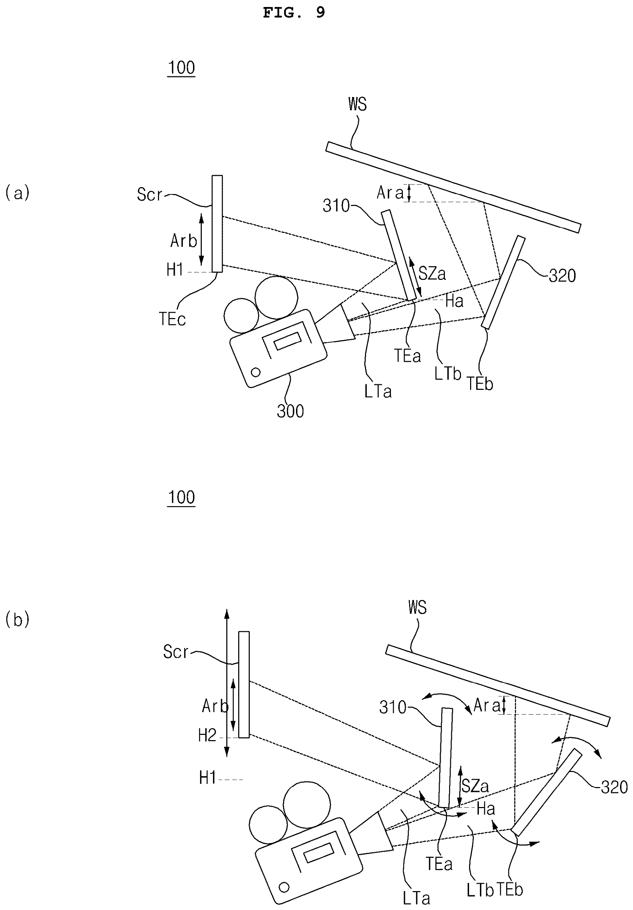

FIG. 9 illustrates an example in which a first projection image and a second projection image are displayed as in FIG. 4B, and subsequently a height of the screen is changed.

Referring to FIG. 9, the picture generation device 300 in the vehicle display apparatus 100 according to an embodiment of the present disclosure outputs a first projection image LTa and a second projection image LTb, as shown in (a) of FIG. 9.

In this case, the size of the first projection image LTa projected on one surface of the screen Scr can correspond to a first size Arb in the vertical direction, and the size of the second projection image LTb projected on one surface of the windshield WS can correspond to a second size Ara in the vertical direction.

According to (a) of FIG. 9, the picture generation device 300 outputs the first projection image LTa upward relative to the second projection image LTb.

In addition, according to (a) of FIG. 9, a height Ha of a lower end TEa of the first mirror 310 can be higher than a height of a lower end TEb of the second mirror 320.

Meanwhile, the signal processing device 170 can be configured to adjust a height of the screen Scr.

For example, the signal processing device 170 can control the second actuator ACTc to adjust a height or an angle of the screen Scr.

(b) of FIG. 9 illustrates an example in which the height of the screen Scr increases from a first height H1 to a second height H2 as the second actuator ACTc operates.

Meanwhile, upon adjusting the height of the screen Scr, the signal processing device 170 can control the first actuator ACTa to change a position or an angle of the first mirror 310, or can control the third actuator ACTb to adjust a height or an angle of the second mirror 320.

For example, even when the height of the screen Scr increases, the signal processing device 170 can be configured to maintain the first projection image LTa projected on one surface of the screen Scr at the first size Arb in the vertical direction and maintain the second projection image LTb at the second size Ara in the vertical direction.

In the figure, as the height of the screen Scr increases from the first height H1 to the second height H2, the position or the angle of the first mirror 310 is changed to thereby increase an incident angle of the first projection image LTa on the first mirror 310, and as the height or the angle of the second mirror 310 is changed to thereby decrease an incident angle of the second projection image LTb on the second mirror 320.

Accordingly, it is possible to maintain the sizes of the cluster display and the head-up display while setting (or adjusting) the height of the cluster display for a driver.

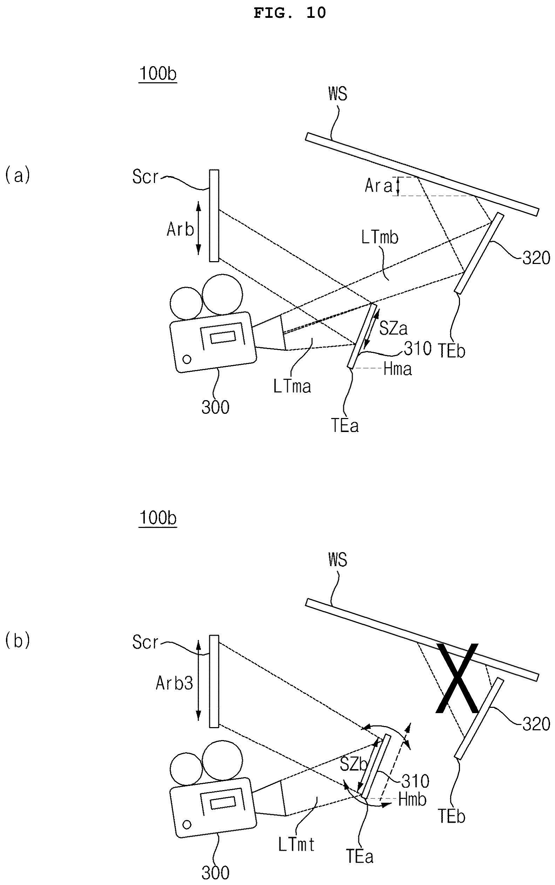

FIG. 10 illustrates another example in which a first projection image and a second projection image are displayed as in FIG. 4B, and subsequently display only the first projection image as in FIG. 4D.

FIG. 10 is similar to FIG. 6, except that the picture generation device 300 outputs the first projection image LTa downward relative to the second projection image LTb.

Referring to FIG. 10, the picture generation device 300 in the vehicle display apparatus 100 according to an embodiment of the present disclosure outputs a first projection image LTa and a second projection image LTb, as shown in (a) of FIG. 10.

In this case, the size of the first projection image LTa projected on one surface of the screen Scr can correspond to a first size Arb in the vertical direction, and the size of the second projection image LTb projected on one surface of the windshield WS can correspond to a second size Ara in the vertical direction.

According to (a) of FIG. 10, the picture generation device 300 can output the first projection image LTa downward relative to the second projection image LTb.

In addition, according to (a) of FIG. 10, a height Hma of a lower end TEa of the first mirror 310 can be less than a height of a lower end TEb of the second mirror 320.

Meanwhile, when the height of the lower end TEa of the first mirror 310 is less than the height of the lower end TEb of the second mirror 320, the signal processing device 170 can be configured to increase the height of the lower end TEa of the first mirror 310, and increase the size of the first projection image LTa projected on the screen Scr. Accordingly, it is possible to change the size of the cluster display while implementing a plurality of displays in an integrated manner by using the single picture generation device 300.

(b) of FIG. 10 illustrates an example in which the first projection image LTa projected on the screen Scr is at its maximum size.

That is, (b) of FIG. 10 illustrates that the second projection image LTb projected on one surface of the windshield WS is not projected.

For example, when the height of the lower end TEa of the first mirror 310 is Hma, the signal processing device 170 can be configured to increase the height of the lower end TEa of the first mirror 310 to Hmb, as illustrated in the figure.

Meanwhile, in a display mode as in (a) of FIG. 10, the signal processing device 170 can be configured to display the first projection image LTa on the screen Scr and project and reflect the second projection image LTb on the windshield WS. In a cluster-only display mode as in (b) of FIG. 10, the signal processing device 170 can be configured to display the first projection image LTa on the screen Scr and not project the second projection image LTb on the windshield WS. Accordingly, it is possible to change the size of the cluster display while implementing a plurality of displays in an integrated manner by using the single picture generation device 300.

Meanwhile, a size SZb of an area in which the first projection image LTa is incident on the first mirror 310 in a cluster-only display mode as in (b) of FIG. 10 can be greater than a size SZa of an area in which the first projection image LTa is incident on the first mirror 310 in a multi-display mode as in (a) of FIG. 10.

That is, compared to (a) of FIG. 10, in the case of (b) of FIG. 10, the size of the first projection image LTa output from the picture generation device 300 is larger, and accordingly, the size of the area incident on the first mirror 310 becomes larger, and consequently, the size of the first projection image LTa projected on the screen Scr becomes larger.

In this case, the size of the first projection image LTa projected on one surface of the screen Scr can correspond to a fifth size Arb3 in the vertical direction. That is, the fifth size Arb3 can be greater than the first size Arb.

Accordingly, it is possible to change the size of the cluster display while implementing a plurality of displays in an integrated manner by using the single picture generation device 300.

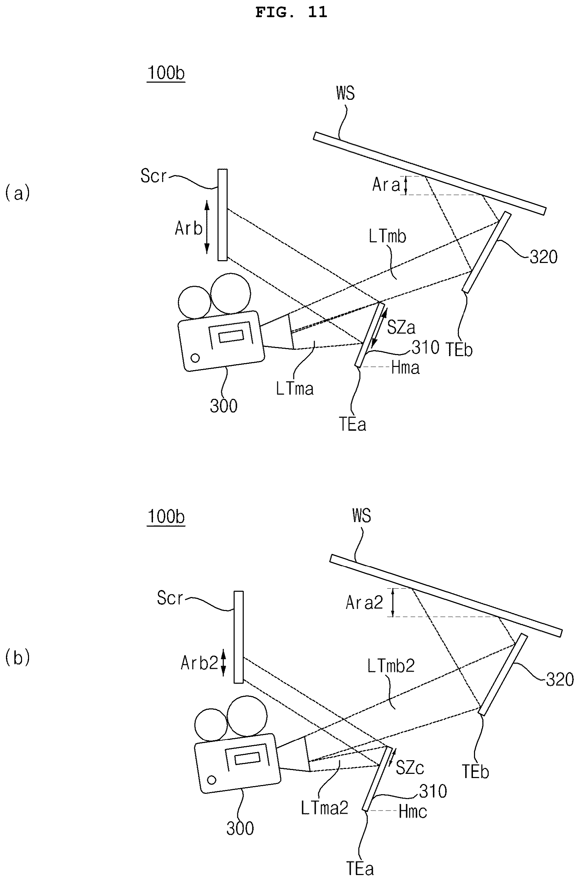

FIG. 11 illustrates another example in which a first projection image and a second projection image are displayed as shown in FIG. 4B, and subsequently, the size of the first projection image decreases as in FIG. 4C.

Referring to FIG. 11, the picture generation device 300 in the vehicle display apparatus 100 according to an embodiment of the present disclosure outputs a first projection image LTa and a second projection image LTb, as shown in (a) of FIG. 11.

In this case, the size of the first projection image LTa projected on one surface of the screen Scr can correspond to a first size Arb in the vertical direction, and the size of the second projection image LTb projected on one surface of the windshield WS can correspond to a second size Ara in the vertical direction.

According to (a) of FIG. 11, the picture generation device 300 outputs the first projection image LTa downward relative to the second projection image LTb.

In addition, according to (a) of FIG. 11, a height Hma of a lower end TEa of the first mirror 310 can be higher than a height of a lower end TEb of the second mirror 320.

Meanwhile, when the height of the lower end TEa of the first mirror 310 is less than the height of the lower end TEb of the second mirror 320, the signal processing device 170 can be configured to decrease the height of the lower end TEa of the first mirror 310, and decrease the size of the first projection image LTa projected on the screen Scr. Accordingly, it is possible to change the size of the cluster display while implementing a plurality of displays in an integrated manner by using the single picture generation device 300.

(b) of FIG. 11 illustrates an example in which the size of the first projection image LTa projected on the screen Scr is less than that in (a) of FIG. 11.

That is, (b) of FIG. 11 illustrates that, as in FIG. 4C, the size of the second projection image LTb projected on one surface of the windshield WS is greater than the size of the first projection image LTa projected on the screen Scr.

For example, when the height of the lower end TEa of the first mirror 310 is Hma, the signal processing device 170 can be configured to decrease the height TEa of the lower end TEa of the first mirror 310 to Hmc, as illustrated in the figure.

Meanwhile, a size SZc of an area in which the first projection image LTa is incident on the first mirror 310 in a multi-display mode as in (b) of FIG. 11 can be less than a size SZa of an area in which the first projection image LTa is incident on the first mirror 310 in a multi-display mode as in (a) of FIG. 11.

That is, compared to (a) of FIG. 11, in the case of (b) of FIG. 11, the size of the first projection image LTa output from the picture generation device 300 is smaller, and accordingly, the size of the area incident on the first mirror 310 becomes smaller, and consequently, the size of the first projection image LTa projected on the screen Scr becomes smaller.

In this case, the size of the first projection image LTa projected on one surface of the screen Scr can correspond to a third size Arb2 in the vertical direction. That is, the third size Arb2 can be less than the first size Arb.

Accordingly, it is possible to change the size of the cluster display while implementing a plurality of displays in an integrated manner by using the single picture generation device 300.

Meanwhile, a size of an area incident on the second mirror 320 in a multi-display mode as in (b) of FIG. 11 can be greater than a size of an area incident on the second mirror 320 in a multi-display mode as in (a) of FIG. 11.

That is, compared to (a) of FIG. 11, in the case of (b) of FIG. 11, the size of the second projection image LTb output from the picture generation device 300 is large, and accordingly, the size of the area incident on the second mirror 320 becomes larger, and consequently, the size of the second projection image projected on the windshield WS becomes larger.

In this case, the size of the second projection image LTb projected on one surface of the windshield WS can correspond to a fourth size Ara2 in the vertical direction. That is, the fourth size Ara2 can be greater than the second size Ara.

Accordingly, it is possible to change the size of the head-up display while implementing a plurality of displays in an integrated manner by using the single picture generation device 300.

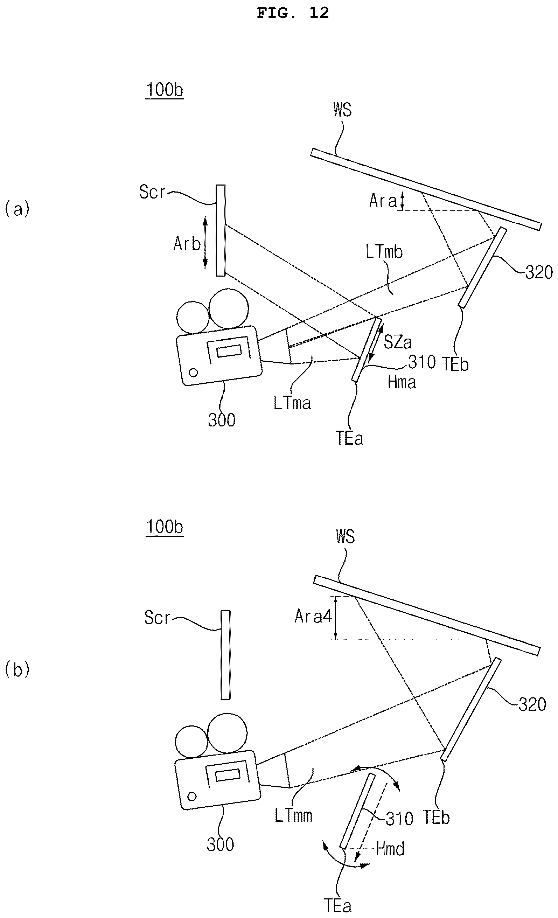

FIG. 12 illustrates another example in which a first projection image and a second projection image are displayed as in FIG. 4B, and subsequently only the second projection image is displayed as in FIG. 4E.

Referring to FIG. 12, the picture generation device 300 in the vehicle display apparatus 100 according to an embodiment of the present disclosure outputs a first projection image LTa and a second projection image LTb, as shown in (a) of FIG. 12.

In this case, the size of the first projection image LTa projected on one surface of the screen Scr can correspond to a first size Arb in the vertical direction, and the size of the second projection image LTb projected on one surface of the windshield WS can correspond to a second size Ara in the vertical direction.

Referring to (a) of FIG. 12, the picture generation device 300 outputs the first projection image LTa downward relative to the second projection image LTb.

In addition, according to (a) of FIG. 12, a height Hma of a lower end TEa of the first mirror 310 can be less than a height of a lower end TEb of the second mirror 320.

Meanwhile, when the height of the lower end TEa of the first mirror 310 is less than the height of the lower end TEb of the second mirror 320, the signal processing device 170 can be configured to decrease the height of the lower end TEa of the first mirror 310, and decrease the size of the first projection image LTa projected on the screen Scr.

(b) of FIG. 12 illustrates an example in which the first projection image is not projected on the screen Scr, and the second projection image LTb projected on one surface of the windshield WS is at its maximum size.

For example, when the height of the lower end TEa of the first mirror 310 is Hma, the signal processing device 170 can be configured to decrease the height of the lower end TEa of the first mirror to Hmd, as illustrated in the figure.

Meanwhile, in a display mode as in (a) of FIG. 12, the signal processing device 170 can control such that the first projection image LTa is displayed on the screen Scr and the second projection image LTb is projected on and reflected on the windshield WS. In a head-up-only display mode as in (b) of FIG. 12, the signal processing device 170 can be configured to not project the first projection image LTa on the screen Scr and project and reflect the second projection image LTb on the windshield WS. Accordingly, it is possible to change the size of the head-up display while implementing a plurality of displays in an integrated manner by using the single picture generation device 300.

Meanwhile, a size of an area in which the second projection image LTb is incident on the second mirror 320 in a head-up-only display mode as in (b) of FIG. 12 can be greater than a size of an area in which the second projection image LTb is incident on the second mirror 320 in a multi-display mode as in (a) of FIG. 12.

In this case, the size of the second projection image LTb projected on one surface of the windshield WS can correspond to a sixth size Ara4 in the vertical direction. That is, the sixth size Ara4 can be greater than the second size Ara.

Accordingly, it is possible to change the size of the head-up display while implementing a plurality of displays in an integrated manner by using the single picture generation device 300.

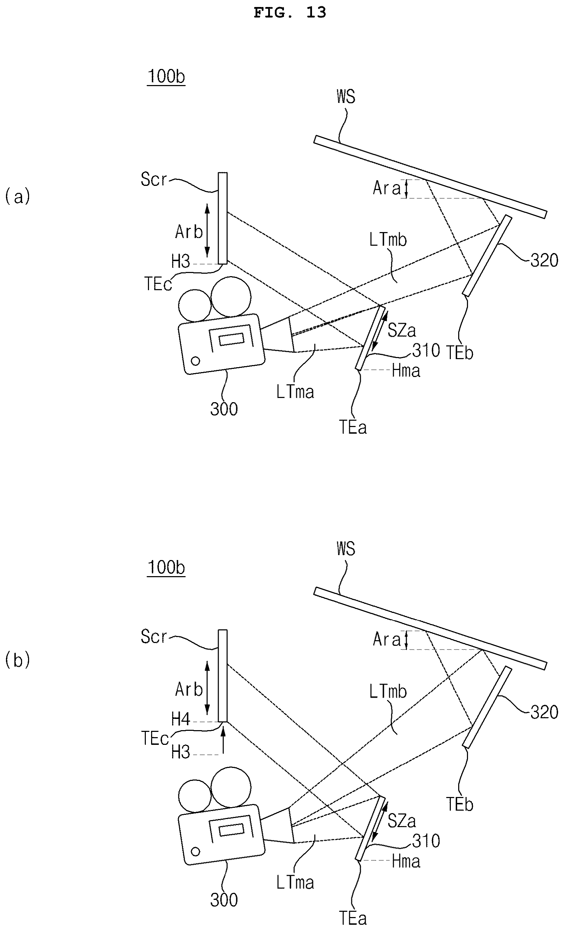

FIG. 13 illustrates another example in which a first projection image and a second projection image are displayed as in FIG. 4B, and subsequently, a height of the screen is changed.

Referring to FIG. 13, the picture generation device 300 in the vehicle display apparatus 100 according to an embodiment of the present disclosure outputs a first projection image LTa and a second projection image LTb, as shown in (a) of FIG. 13.

In this case, the size of the first projection image LTa projected on one surface of the screen Scr can correspond to a first size in the vertical direction, and the size of the second projection image LTb projected on one surface of the windshield WS can correspond to a second size Ara in the vertical direction.

According to (a) of FIG. 13, the picture generation device 300 outputs the first projection image LTa downward relative to the second projection image LTb.

In addition, according to (a) of FIG. 13, a height Hma of a lower end TEa of the first mirror 310 can be less than a height of a lower end TEb of the second mirror 320.

Meanwhile, the signal processing device 170 can be configured to adjust a height of the screen Scr.

For example, the signal processing device 170 can control the second actuator ACTc that adjusts a height or an angle of the screen Scr.

(b) of FIG. 13 illustrates an example in which the height of the screen increases from a third height H3 to a fourth height H4 as the second actuator ACTc operates.

Meanwhile, upon adjusting the height of the screen Scr, the signal processing device 170 can control the first actuator ACTa to change a position or an angle of the first mirror 310, or can control the third actuator ACTb to adjust a height or an angle of the second mirror 320.

For example, even when the height of the screen Scr increases, the signal processing device 170 can be configured to maintain the first projection image LTa projected on one surface of the screen Scr at the first size Arb in the vertical direction and maintain the second projection image LTb at the second size Ara in the vertical direction.

In the figure, as the height of the screen Scr increases from the third height H3 to the fourth height H4, the position or the angle of the first mirror 310 is changed.

Accordingly, it is possible to maintain the sizes of the cluster display and the head-up display while setting (or adjusting) the height of the cluster display for a driver.

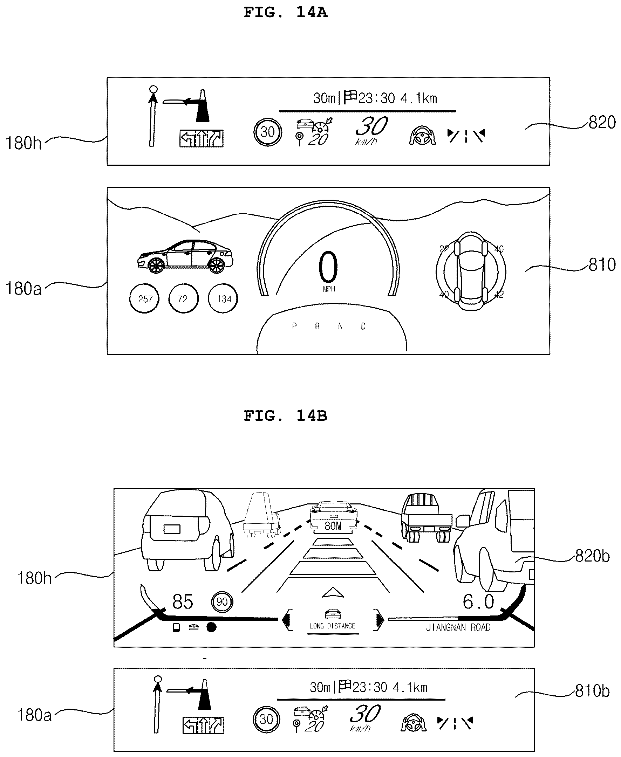

FIGS. 14A to 14D are diagrams referred to in the description of FIG. 5.

FIG. 14A corresponds to FIG. 4B, and illustrates a case in which the first display 180a has a first size Arb and the third display 180h has a second size Ara that is less than the first size Arb.

Referring to FIG. 14A, a first projection image 810 of the first size Arb can be displayed on the first display 180a corresponding to a cluster display, and a second projection image 820 of the second size Ara can be displayed on the third display 180h corresponding to a head-up display.

FIG. 14B corresponds to FIG. 4C, and illustrates a case in which the first display 180a has a third size Arb2 and the third display 180h has a fourth size Ara2 that is greater than the third size Arb2.

Referring to FIG. 14B, a first projection image 810b of the third size Arb2 can be displayed on the first display 180a corresponding to a cluster display, and a second projection image 820b of the fourth size Ara2 can be displayed on the third display 180h corresponding to a head-up display.

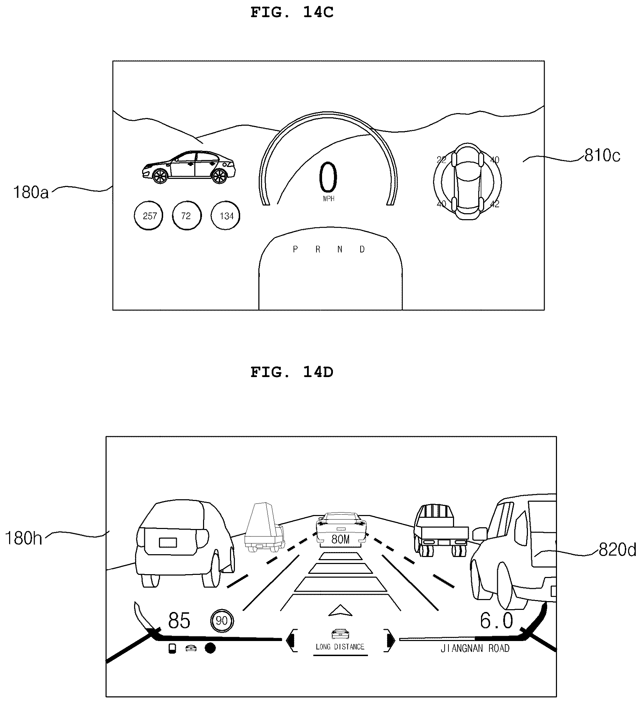

FIG. 14C corresponds to FIG. 4D, and illustrates a case in which the first display 180a has a fifth size Arb3 and no projection image is projected on the third display 180h, which serves as a head-up display.

Referring to FIG. 14C, a first projection image 810c of the fifth size Arb3 can be displayed on the first display 180a corresponding to a cluster display, and no projection image is displayed on the third display 180h corresponding to a head-up display.

FIG. 14D corresponds to FIG. 4E, and illustrates a case in which no projection image is projected on the first display 180a and the third display 180h has a large sixth size Ara4.

Referring to FIG. FIG. 14D, no projection image is displayed on the first display 180a corresponding to a cluster display, and a second projection image 820d of the sixth size Ara4 can be displayed on the third display 180h corresponding to a head-up display.

Meanwhile, the vehicle display apparatus 100 according to another embodiment of the present disclosure includes a picture generation device 300 that includes a light output device 400 and outputs a projection image, a first mirror 310 that reflects a first projection image LTa, which is a portion of the projection image from the picture generation device 300, a screen Scr having one surface on which the first projection image LTa reflected from the first mirror 310 is projected, a second mirror 320 that reflects a second projection image LTb, which is another portion of the projection image from the picture generation device 300 to a windshield WS, and a first actuator ACTa that changes a position or an angle of the first mirror 310. Based on a change in the position or the angle of the first mirror 310, a size of the first projection image LTa projected on the screen Scr or a size of the second projection image LT reflected on the windshield WS is changed. Accordingly, it is possible to change the size of the cluster display or the head-up display while implementing a plurality of displays in an integrated manner by using the single picture generation device 300.

The vehicle display apparatus 100 according to another embodiment of the present disclosure can further include a signal processing device 170 that controls the first actuator ACTa, and based on a change in the position or the angle of the first mirror 310, the signal processing device 170 can be configured to change the size of the first projection image LTa projected on the screen Scr or the size of the second projection image LT reflected on the windshield WS. Accordingly, it is possible to change the size of the cluster display or the head-up display while implementing a plurality of displays in an integrated manner by using the single picture generation device 300.

Meanwhile, the signal processing device 170 can be configured to adjust a height of a lower end TEa of the first mirror 310, and change the size of the first projection image LTa projected on the screen Scr or the size of the second projection image LT reflected on the windshield WS. Accordingly, it is possible to change the size of the cluster display or the head-up display while implementing a plurality of displays in an integrated manner by using the single picture generation device 300.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A display apparatus for a vehicle, the display apparatus comprising:
a picture generation device including a light output device and configured to output a projection image;
a first mirror configured to reflect a first projection image corresponding to a portion of the projection image from the picture generation device;
a screen including one surface on which the first projection image reflected from the first mirror is projected;
a second mirror configured to reflect a second projection image corresponding to another portion of the projection image from the picture generation device to a windshield; and
a first actuator configured to change a position or an angle of the first mirror,
wherein, based on a change in the position or the angle of the first mirror, a size of the first projection image projected on the screen is changed.

2. The display apparatus of claim 1, wherein, based on a change in the position or the angle of the first mirror, a size of the second projection image reflected on the windshield is changed.

3. The display apparatus of claim 1, further comprising a signal processing device configured to control the first actuator,
wherein, based on a change in the position or the angle of the first mirror, the signal processing device is configured to change the size of the first projection image projected on the screen.

4. The display apparatus of claim 3, wherein, based on a change in the position or the angle of the first mirror, the signal processing device is configured to change a size of the second projection image reflected on the windshield.

5. The display apparatus of claim 3, wherein, in response to a height of a lower end of the first mirror being higher than a height of a lower end of the second mirror, the signal processing device is configured to increase the height of the lower end of the first mirror, and decrease the size of the first projection image projected on the screen.

6. The display apparatus of claim 3, wherein, in response to a height of a lower end of the first mirror being higher than a height of a lower end of the second mirror, the signal processing device is configured to decrease the height of the lower end of the first mirror, and increase the size of the first projection image projected on the screen.

7. The display apparatus of claim 3, wherein the signal processing device is configured to:
in a multi-display mode, display the first projection image on the screen, and project and reflect the second projection image on the windshield; and
in a cluster-only display mode, display the first projection image on the screen, and not project the second projection image on the windshield.

8. The display apparatus of claim 1, wherein a size of an area in which the first projection image is incident on the first mirror in a cluster-only display mode is greater than a size of an area in which the first projection image is incident on the first mirror in a multi-display mode.

9. The display apparatus of claim 3, wherein the signal processing device is configured to:
in a multi-display mode, display the first projection image on the screen, and project and reflect the second projection image on the windshield; and
in a head-up-only display mode, not project the first projection image on the screen, and project and reflect the second projection image on the windshield."

10. The display apparatus of claim 1, wherein a size of an area in which the second projection image is incident on the second mirror in a head-up-only display mode is greater than a size of an area in which the second projection image is incident on the second mirror in a multi-display mode.

11. The display apparatus of claim 3, further comprising a second actuator configured to adjust a height or an angle of the screen,
wherein the signal processing device is configured to adjust the height of the screen.

12. The display apparatus of claim 11, further comprising a third actuator configured to adjust a height or an angle of the second mirror,
wherein, in response to an adjustment of the height of the screen, the signal processing device is configured to adjust a height or an angle of the first mirror or the second mirror."

13. The display apparatus of claim 3, wherein, in response to a height of a lower end of the first mirror being less than a height of a lower end of the second mirror, the signal processing device is configured to decrease the height of the lower end of the first mirror, and decrease the size of the first projection image projected on the screen.

14. The display apparatus of claim 3, wherein, in response to a height of a lower end of the first mirror being less than a height of a lower end of the second mirror, the signal processing device is configured to increase the height of the lower end of the first mirror, and increase the size of the first projection image projected on the screen.

15. A display apparatus for a vehicle, the display apparatus comprising:
a picture generation device including a light output device and configured to output a projection image;
a first mirror configured to reflect a first projection image corresponding to a portion of the projection image from the picture generation device;
a screen including one surface on which the first projection image reflected from the first mirror is projected;
a second mirror configured to reflect a second projection image corresponding to another portion of the projection image from the picture generation device to a windshield; and
a first actuator configured to change a position or an angle of the first mirror,
wherein, based on a change in the position or the angle of the first mirror, a size of the first projection image projected on the screen or a size of the second projection image reflected on the windshield is changed.

16. The display apparatus of claim 15, further comprising a signal processing device configured to control the first actuator,
wherein, based on a change in the position or the angle of the first mirror, the signal processing device is configured to change the size of the first projection image projected on the screen or the size of the second projection image reflected on the windshield.

17. The display apparatus of claim 15, wherein the signal processing device is configured to adjust a height of a lower end of the first mirror, and change the size of the first projection image projected on the screen or the size of the second projection image reflected on the windshield.

18. The display apparatus of claim 15, wherein the signal processing device is configured to display only the first projection image on the screen, and not project the second projection image on the windshield.

19. The display apparatus of claim 15, wherein the signal processing device is configured to display only the second projection image on the windshield, and not project the first projection image on the screen.
